# EUROPEAN PATENT APPLICATION

(11) **EP 4 503 693 A1**
(43) Date of publication of application: **05.02.2025**
(21) Application number: 23774352.1
(22) Date of filing: 21.02.2023
(51) Int. Cl.: H04W 16/14, H04W 16/28

(54) **COMMUNICATION DEVICE AND COMMUNICATION METHOD**

(30) Priority: 25.03.2022 JP 2022050760
(71) Applicant: Sony Group Corporation, Tokyo 108-0075 (JP)
(72) Inventor: SUGAI, Ren, Tokyo 108-0075 (JP); KUSASHIMA, Naoki, Tokyo 108-0075 (JP); HARADA, Hiroshi, Kyoto-shi, Kyoto 606-8501 (JP); MIZUTANI, Keiichi, Kyoto-shi, Kyoto 606-8501 (JP); NISHIKORI, Kazuki, Kyoto-shi, Kyoto 606-8501 (JP)
(74) Representative: Witte, Weller & Partner Patentanwälte mbB
(86) International application number: PCT/JP2023/006151
(87) International publication number: WO 2023/181753

(57) **Abstract**

In a communication device that performs in-band full-duplex communication, communication is performed while avoiding interference due to signals of other communication devices. A communication device (20, 40) according to the present disclosure includes a control unit (24, 45). The control unit (24, 45) included in the communication device (20, 40) according to the present disclosure performs control to detect a reception signal by performing reception in the same frequency band as transmission when transmitting to another radio communication device. Furthermore, the control unit (24, 45) included in the communication device (20, 40) according to the present disclosure further performs an interference avoidance operation of avoiding interference based on the detected reception signal.

## Description

### Field

The present disclosure relates to a communication device and a communication method.

### Background

A radio communication system that improves utilization efficiency of communication resources by sharing communication resources among a plurality of radio communication systems has been proposed. For example, a cognitive radio system that detects an unused frequency and secondarily uses the detected frequency has been proposed. However, in a case where communication resources of the same frequency band are shared, a problem such as a communication failure due to interference occurs. Therefore, there has been proposed a radio communication device that immediately stops secondary use of a frequency when spectrum sensing is performed and communication by a primary user is detected (refer to, for example, Patent Literature 1).

### Citation List

### Patent Literature

Patent Literature 1: JP 2014-116898 A

### Summary

### Technical Problem

The communication device described above detects a signal of the primary user of the cognitive radio while transmitting its own transmission signal using a transmission antenna. In addition, the above-described radio communication device performs an avoidance operation for protecting the communication of the primary user. On the other hand, the above-described radio communication device has a problem that an operation implemented by cooperation operation and information sharing between terminals is not clear.

Therefore, the present disclosure proposes a communication device and a communication method that detect another communication device that performs radio communication in the same frequency band and perform a linkage operation.

### Solution to Problem

A communication device according to the present disclosure includes: a control unit that performs control of detecting a reception signal by performing sensing in the same frequency band as transmission when transmitting to another radio communication device and control performing an interference avoidance operation of avoiding interference based on a detection result.

Furthermore, a communication method according to the present disclosure includes: detecting a reception signal by performing sensing in the same frequency band as transmission when transmitting to another radio communication device; and performing an interference avoidance operation of avoiding interference based on a detection result.

### Brief Description of Drawings

FIG. 1 is a diagram illustrating an example of an overall configuration of a communication system according to an embodiment of the present disclosure.
FIG. 2 is a diagram illustrating a configuration example of a base station device according to an embodiment of the present disclosure.
FIG. 3 is a diagram illustrating a configuration example of a terminal device according to an embodiment of the present disclosure.
FIG. 4 is a diagram illustrating an example of a communication system according to an embodiment of the present disclosure.
FIG. 5 is a diagram illustrating an example of a communication sequence according to an embodiment of the present disclosure.
FIG. 6 is a diagram illustrating an example of a communication method according to an embodiment of the present disclosure.

### Description of Embodiments

Hereinafter, embodiments of the present disclosure will be described in detail with reference to the drawings. The description will be given in the following order. In each of the following embodiments, the same parts are denoted by the same reference numerals, and redundant description will be omitted.
1. Basic Configuration
2. Embodiments

### (1. Basic configuration)

### [System Configuration]

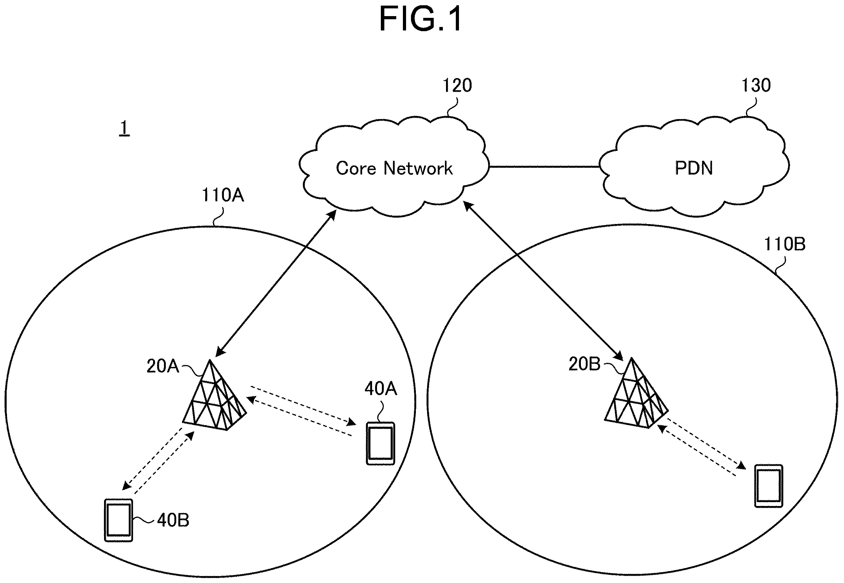

FIG. 1 is a diagram illustrating an example of an overall configuration of a communication system 1 according to an embodiment of the present disclosure. As illustrated in FIG. 1, the communication system 1 includes a plurality of base station devices 20 (20A and 20B), a plurality of terminal devices 40 (40A and 40B), a core network 120, and a packet data network (PDN) 130. Note that the number of each device is not limited thereto, and for example, each of the base station device 20 and the terminal device 40 may be one.

The base station device 20 is a communication device that operates a cell 110 and provides a radio communication service to one or more terminal devices 40 located inside the coverage of the cell 110. The cell 110 is operated according to an optional radio communication system such as LTE or NR. The base station device 20 is connected to the core network 120. The core network 120 is connected to the packet data network (PDN) 130 via a gateway device (not illustrated). Note that the base station device 20 may include a set of a plurality of physical or logical devices. For example, in the embodiment of the present disclosure, the base station device 20 may be distinguished into a plurality of devices of a baseband unit (BBU) and a radio unit (RU), and may be interpreted as an assembly of the plurality of devices. Further or alternatively, in the embodiment of the present disclosure, the base station device 20 may be either or both of a BBU and an RU. The BBU and the RU may be connected by a predetermined interface (for example, eCPRI). Additionally or alternatively, RU may be referred to as an RRU (Remote Radio Unit) or a RD (Radio DoT). Further or alternatively, the RU may correspond to the gNB-DU described later. Further or alternatively, the BBU may correspond to a gNB-CU to be described later. Additionally or alternatively, the RU may be a device integrally formed with the antenna. An antenna (for example, an antenna integrally formed with an RU) included in the base station device 20 may adopt an advanced antenna system and support MIMO (for example, FD-MIMO) or beamforming. In the advanced antenna system, the antenna (for example, an antenna integrally formed with an RU) included in the base station device 20 may include, for example, 64 transmission antenna ports and 64 reception antenna ports.

Furthermore, a plurality of the base station devices 20 may be connected to each other. One or more base station devices 20 may be included in a radio access network (RAN). That is, the base station device 20 may be simply referred to as a RAN, a RAN node, an access network (AN), or an AN node. The RAN in LTE is referred to as an enhanced universal terrestrial RAN (EUTRAN). RAN in NR is referred to as NGR_AN. RAN in W-CDMA (UMTS) is referred to as UTRAN. The base station device 20 in LTE is referred to as eNodeB (Evolved Node B) or an eNB. That is, the EUTRAN includes one or more eNodeBs (eNBs). Furthermore, the base station device 20 of NR is referred to as a gNodeB or a gNB. That is, the NGR_AN includes one or more gNBs. Further, the EUTR_AN may include a gNB (en-gNB) connected to a core network (EPC) in an LTE communication system (EPS). Similarly, the NGR_AN may include an ng-eNB connected to a core network 5GC in a 5G communications system (5GS). Further or alternatively, when the base station device 20 is an eNB, a gNB, or the like, it may be referred to as 3GPP access. Further or alternatively, when the base station device 20 is a radio access point (Access Point), it may be referred to as Non-3GPP access. Further or alternatively, the base station device 20 may be an optical extension device called a remote radio head (RRH). Furthermore or alternatively, in a case where the base station device 20 is a gNB, the base station device 20 may be referred to as a combination of the above-described gNB-CU (Central Unit) and gNB-DU (Distributed Unit) or any of them. The gNB-CU hosts a plurality of upper layers (for example, RRC, SDAP, and PDCP) of an AS (Access Stratum) for communication with the UE. On the other hand, the gNB-DU hosts a plurality of lower layers (for example, RLC, MAC and PHY) of the AS. That is, among message information to be described later, RRC signaling (for example, various SIBs including MIB and SIB1, an RRC setup message, and an RRC reconfiguration message) may be generated by the gNB-CU, and DCI and various physical channels (for example, PDCCH and PBCH) to be described later may be generated by the gNB-DU. Alternatively, in the RRC signaling, for example, some configurations such as IE: cellGroupConfig may be generated by the gNB-DU, and the remaining configurations may be generated by the gNB-CU. These configurations may be transmitted and received through an F1 interface described later. The base station device 20 may be configured to be able to communicate with another base station device 20. For example, in a case where the plurality of base station devices 20 are eNBs or a combination of an eNB and a gNB, the base station devices 20 may be connected by an X2 interface. Further or alternatively, in a case where the plurality of base station devices 20 are gNBs or a combination of a gn-eNB and a gNB, the devices may be connected by an Xn interface. Further or alternatively, in a case where the plurality of base station devices 20 is a combination of the gNB-CU and the gNB-DU, the devices may be connected by the above-described F1 interface. A message/information (RRC signaling or DCI information, Physical Channel) to be described later may be communicated (for example, via X2, Xn, and F1 interfaces) among the plurality of base station devices 20.

Further, as described above, the base station device 20 may be configured to manage a plurality of cells. A cell provided by the base station device 20 is referred to as a serving cell. The serving cell includes a primary cell (PCell) and a secondary cell (SCell). In a case where the dual connectivity (for example, EUTRA-EUTRA Dual Connectivity, EUTRA-NR Dual Connectivity (ENDC), EUTRA-NR Dual Connectivity with 5GC, NR-EUTRA Dual Connectivity (NEDC), and NR-NR Dual Connectivity) is provided to the UE (for example, the terminal device 40), the PCell and zero or one or more SCells (S) provided by the MN (Master Node) are referred to as an MCG (Master Cell Group). Further, the serving cell may include a PSCell (Primary Secondary Cell or Primary SCG Cell). In other words, in a case where the dual connectivity is provided to the UE, the PSCell and zero or one or more SCells (S) provided by the SN (Secondary Node) are referred to as a SCG (Secondary Cell Group). Unless specially configured (for example, PUCCH on SCell), the physical uplink control channel (PUCCH) is transmitted in the PCell and the PSCell, but is not transmitted in the SCell. In addition, the Radio Link Failure is also detected in the PCell and the PSCell, but is not detected (may not be detected) in the SCell. As described above, since the PCell and the PSCell have a special role in the serving cell (S), they are also referred to as SpCell (Special Cell). One downlink component carrier and one uplink component carrier may be associated with one cell. In addition, the system bandwidth corresponding to one cell may be divided into a plurality of bandwidth parts (BWPs). In this case, one or more BWPs may be configured for the UE, and one BWP may be used for the UE as the Active BWP. In addition, radio resources (for example, a frequency band, a numerology (subcarrier spacing), and a slot format (slot configuration)) that can be used by the terminal device 40 may be different for each cell, each component carrier, or each BWP.

When the core network 120 is an NR core network (5G Core (5GC)), the core network 120 may include an AMF (Access and Mobility Management Function), a SMF (Session Management Function), a UPF (User Plane Function), a PCF (Policy Control Function), and a UDM (Unified Data Management).

When the core network 120 is an LTE core network (Evolved Packet Core (EPC)), the core network 120 may include an MME (Mobility Management Entity), a S-GW (Serving gateway), a P-GW (PDN gateway), a PCRF (Policy and Charging Rule Function), and an HSS (Home Subscriber Server). The AMF and the MME are control nodes that handle control plane signals, and manage a mobility state of the terminal device 40. The UPF and the S-GW/P-GW are nodes that handle user plane signals. The PCF/PCRF is a control node that performs control related to a policy such as QoS (Quality of Service) for a PDU session or a bearer and charging. The UDM/HSS is a control node that handles subscriber data and performs service control.

The terminal device 40 is a communication device that wirelessly communicates with the base station device 20 based on control by the base station device 20. For example, the terminal device 40 measures a downlink signal from the base station device 20 and reports measurement information indicating a measurement result to the base station device 20. The base station device 20 controls radio communication with the terminal device 40 based on the reported measurement information. On the other hand, the terminal device 40 can transmit an uplink signal for measurement to the base station device 20. In that case, the base station device 20 measures the uplink signal from the terminal device 40 and controls the radio communication with the terminal device 40 based on the measurement information.

As described above, the base station devices 20 can transmit and receive information to and from each other using an inter-base station interface. When the core network is a 5GC, the inter-base station interface may be an Xn interface. When the core network is an EPC, the inter-base station interface may be an X2 interface. For example, the base station device 20 transmits measurement information (for example, the measurement result of the cell managed by the source base station device and the measurement result of the neighboring cell) related to the terminal device 40 whose handover is predicted to another adjacent base station device 20. As a result, a stable handover is realized, and the stability of the radio communication of the terminal device 40 is secured.

Note that, although not illustrated in FIG. 1, there may be a communication device that provides a radio communication service operated by another RAT such as Wi-Fi (registered trademark) or MulteFire (registered trademark) other than cellular communication around the communication system 1. Such a communication device is typically connected to the PDN 130.

### [Configuration of Base Station Device]

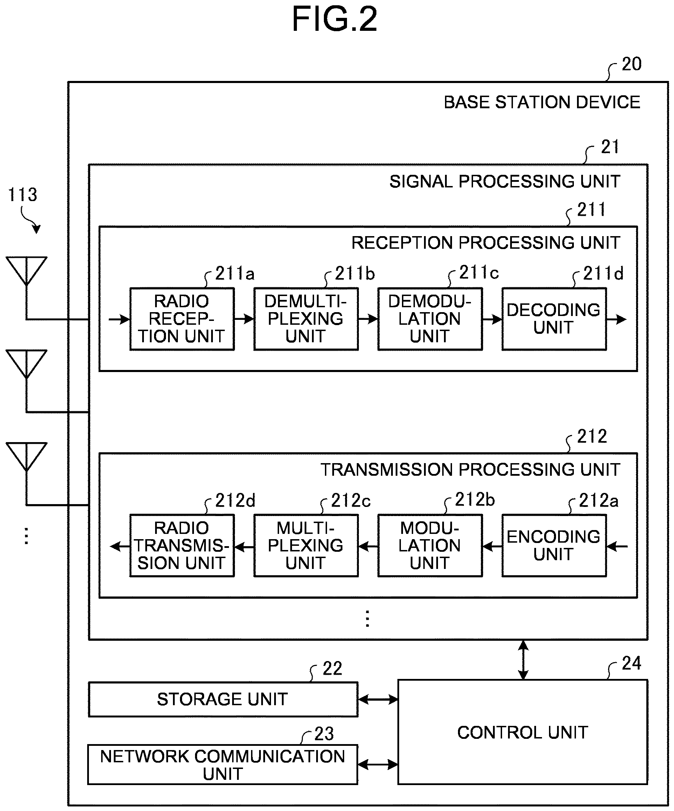

FIG. 2 is a diagram illustrating a configuration example of the base station device 20 according to an embodiment of the present disclosure. The base station device 20 is a communication device (radio system) that wirelessly communicates with the terminal device 40. The base station device 20 is a type of information processing device.

The base station device 20 includes a radio communication unit 21, a storage unit 22, a network communication unit 23, and a control unit 24. Note that the configuration illustrated in the drawing is a functional configuration, and the hardware configuration may be different from the functional configuration. Furthermore, the functions of the base station device 20 may be implemented in a distributed manner in a plurality of physically separated devices.

The radio communication unit 21 is a radio communication interface that wirelessly communicates with other communication devices (for example, the terminal device 40 and another base station device 20). The radio communication unit 21 operates under the control of the control unit 24. The radio communication unit 21 may support a plurality of radio access methods. For example, the radio communication unit 21 may support both NR and LTE. The radio communication unit 21 may support other cellular communication systems such as W-CDMA and cdma 2000. Furthermore, the radio communication unit 21 may support a radio LAN communication system in addition to the cellular communication system. Of course, the radio communication unit 21 may correspond to only one radio access method.

The radio communication unit 21 includes a reception processing unit 211, a transmission processing unit 212, and an antenna 413. The radio communication unit 21 may include a plurality of reception processing units 211, a plurality of transmission processing units 212, and a plurality of antennas 413. When the radio communication unit 21 supports a plurality of radio access methods, each unit of the radio communication unit 21 can be configured individually for each radio access method. For example, if the base station device 20 is compatible with NR and LTE, the reception processing unit 211 and the transmission processing unit 212 may be configured separately for NR and LTE.

The reception processing unit 211 processes the uplink signal received via the antenna 413. The reception processing unit 211 includes a radio reception unit 211a, a demultiplexing unit 211b, a demodulation unit 211c, and a decoding unit 211d.

The radio reception unit 211a performs downconversion, removal of an unnecessary frequency component, control of an amplification level, quadrature demodulation, conversion to a digital signal, removal of a guard interval, extraction of a frequency domain signal by fast Fourier transform, and the like on the uplink signal. For example, it is assumed that the radio access method of the base station device 20 is a cellular communication system such as LTE. At this time, the demultiplexing unit 211b demultiplexes an uplink channel such as a PUSCH (Physical Uplink Shared Channel) and a PUCCH (Physical Uplink Control Channel) and an uplink reference signal from the signal output from the radio reception unit 211a. The demodulation unit 211c demodulates the reception signal using a modulation method such as BPSK (Binary Phase Shift Keying) and QPSK (Quadrature Phase shift Keying) with respect to the modulation symbol of the uplink channel. The modulation method used by the demodulation unit 211c may be multi-level QAM such as 16 QAM (Quadrature Amplitude Modulation), 64 QAM, or 256 QAM. The decoding unit 211d performs a decoding process on the demodulated encoded bits of the uplink channel. The decoded uplink data and uplink control information are output to the control unit 24.

The transmission processing unit 212 performs a process of transmitting the downlink control information and the downlink data. The transmission processing unit 212 includes an encoding unit 212a, a modulation unit 212b, a multiplexing unit 212c, and a radio transmission unit 212d.

The encoding unit 212a encodes the downlink control information and the downlink data input from the control unit 24 using an encoding method such as block encoding, convolutional encoding, turbo encoding, or the like. The modulation unit 212b modulates the encoded bits output from the encoding unit 212a by a predetermined modulation method such as BPSK, QPSK, 16 QAM, 64 QAM, and 256 QAM. The multiplexing unit 212c multiplexes the modulation symbol of each channel and the downlink reference signal and arranges the multiplexed symbols in a predetermined resource element. The radio transmission unit 212d performs various types of signal processing on the signal from the multiplexing unit 212c. For example, the radio transmission unit 212d performs processing such as conversion into a time domain by fast Fourier transform, addition of a guard interval, generation of a baseband digital signal, conversion into an analog signal, quadrature modulation, up-conversion, removal of an extra frequency component, and amplification of power. The signal generated by the transmission processing unit 212 is transmitted from the antenna 413.

The storage unit 22 is a storage device capable of reading and writing data, such as a DRAM, an SRAM, a flash memory, and a hard disk. The storage unit 22 functions as a storage means of the base station device 20.

The network communication unit 23 is a communication interface for communicating with other devices (for example, another base station device 20). For example, the network communication unit 23 is a LAN (Local Area Network) interface such as a NIC (Network Interface Card). The network communication unit 23 may be a USB (Universal Serial Bus) interface including a USB host controller, a USB port, and the like. Furthermore, the network communication unit 23 may be a wired interface or a radio interface. The network communication unit 23 functions as a network communication means of the base station device 20. The network communication unit 23 communicates with other devices under the control of the control unit 24.

The control unit 24 is a controller that controls each unit of the base station device 20. The control unit 24 is implemented by, for example, a processor such as a CPU (Central Processing Unit) or an MPU (Micro Processing Unit). For example, the control unit 24 is implemented by the processor executing various programs stored in a storage device inside the base station device 20 using a RAM (Random Access Memory) or the like as a work area. Note that the control unit 24 may be implemented by an integrated circuit such as an ASIC (Application Specific Integrated Circuit) and a FPGA (Field Programmable Gate Array). Any of the CPU, the MPU, the ASIC, and the FPGA can be regarded as a controller.

### [Configuration of Terminal Device]

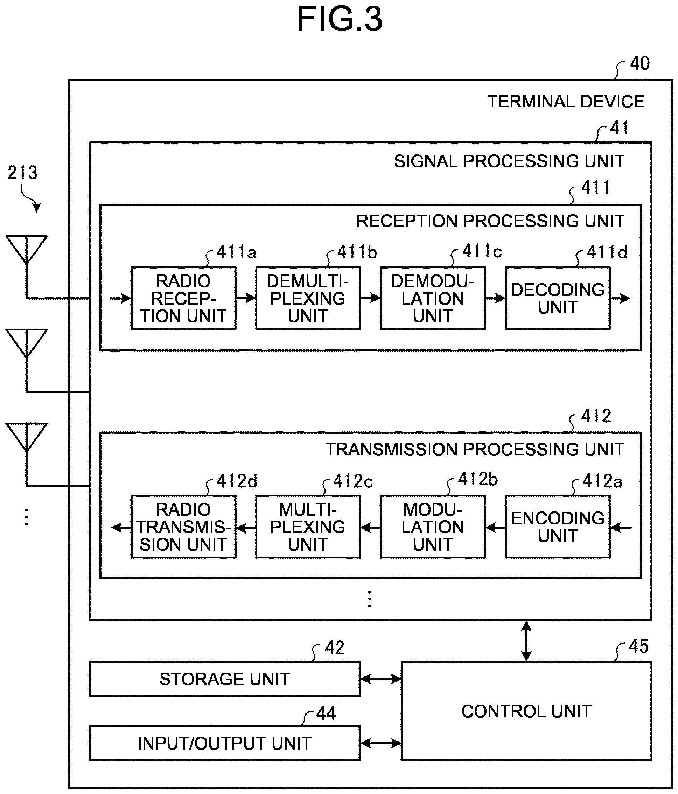

FIG. 3 is a diagram illustrating a configuration example of a terminal device 40 according to an embodiment of the present disclosure. The terminal device 40 is a communication device (radio system) that wirelessly communicates with the base station device 20. The terminal device 40 is a type of information processing device.

The terminal device 40 includes a radio communication unit 41, a storage unit 42, an input/output unit 44, and a control unit 45. Note that the configuration illustrated in the drawing is a functional configuration, and the hardware configuration may be different from the functional configuration. Furthermore, the functions of the terminal device 40 may be implemented in a distributed manner in a plurality of physically separated configurations.

The radio communication unit 41 is a radio communication interface that wirelessly communicates with other communication devices (for example, the base station device 20 and another terminal device 40). The radio communication unit 41 operates under the control of the control unit 45. The radio communication unit 41 corresponds to one or a plurality of radio access methods. For example, the radio communication unit 41 supports both NR and LTE. The radio communication unit 41 may support other radio access methods such as W-CDMA (registered trademark) and cdma 2000 (registered trademark).

The radio communication unit 41 includes a reception processing unit 411, a transmission processing unit 412, and an antenna 313. The radio communication unit 41 may include a plurality of reception processing units 411, a plurality of transmission processing units 412, and a plurality of antennas 313. When the radio communication unit 41 supports a plurality of radio access methods, each unit of the radio communication unit 41 can be configured individually for each radio access method. For example, the reception processing unit 411 and the transmission processing unit 412 may be configured separately for NR and LTE. The configurations of the reception processing unit 411 and the transmission processing unit 412 are similar to those of the reception processing unit 211 and the transmission processing unit 212 of the base station device 20.

The storage unit 42 is a storage device capable of reading and writing data, such as a DRAM, an SRAM, a flash memory, and a hard disk. The storage unit 42 functions as a storage means of the terminal device 40.

The input/output unit 44 is a user interface for exchanging information with the user. For example, the input/output unit 44 is an operation device for the user to perform various operations, such as a keyboard, a mouse, an operation key, and a touch panel. Alternatively, the input/output unit 44 is a display device such as a liquid crystal display and an organic electroluminescence display. The input/output unit 44 may be an acoustic device such as a speaker and a buzzer. The input/output unit 44 may be a lighting device such as an LED (Light Emitting Diode) lamp. The input/output unit 44 functions as an input/output unit (Input means, output means, operation means, or notification means) of the terminal device 40.

The control unit 45 is a controller that controls each unit of the terminal device 40. The control unit 45 is implemented by, for example, the processor such as a CPU and an MPU. For example, the control unit 45 is implemented by a processor executing various programs stored in a storage device inside the terminal device 40 using a RAM or the like as a work area. Note that the control unit 45 may be implemented by an integrated circuit such as an ASIC or an FPGA. Any of the CPU, the MPU, the ASIC, and the FPGA can be regarded as a controller.

### (2. Embodiment)

### [Configuration of Communication System]

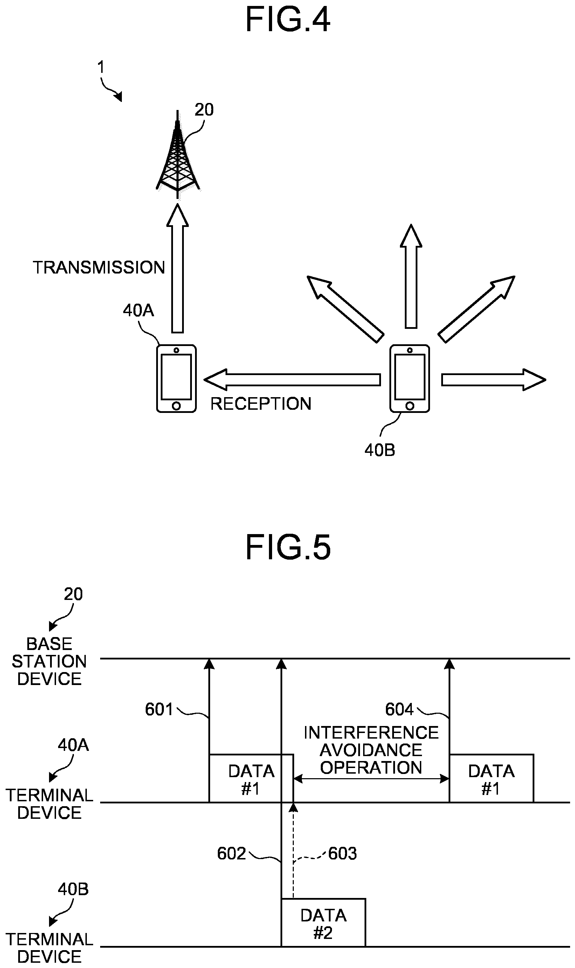

FIG. 4 is a diagram illustrating an example of a communication system according to an embodiment of the present disclosure. The drawing is a diagram illustrating an example of the communication system 1. The communication system 1 includes a base station device 20 and a terminal device 40A. The terminal device 40A is included in a cell operated by the base station device 20, and performs transmission and reception with the base station device 20. In addition, the terminal device 40A is a terminal device capable of in-band full-duplex communication. The in-band full-duplex communication is a multiplexing method that performs transmission and reception in the same frequency band. The drawing illustrates a state in which the terminal device 40A performs transmission to the base station device 20. The terminal device 40A can receive a signal of the same frequency band from another radio communication device during the transmission. It is possible to detect a signal from another radio communication device using the in-band full-duplex communication.

The other terminal device 40B in the drawing illustrates a state of outputting a transmission signal to its own destination. When the transmission signal of the terminal device 40B and the transmission signal of the terminal device 40A are signals of the same frequency band, inter-terminal interference or the like occurs. This causes a failure in communication of one or both of the terminal device 40A and the terminal device 40B. In order to prevent such a communication failure, inter-terminal interference needs to be avoided. As described above, since signals from other radio communication devices can be received even during transmission, the terminal device 40A can detect signals from the terminal device 40B. In addition, the terminal device 40A performs an operation of avoiding inter-terminal interference based on the detected signal from the terminal device 40B.

### [Communication Sequence]

FIG. 5 is a diagram illustrating an example of a communication sequence according to an embodiment of the present disclosure. The horizontal axis in the drawing represents a time axis. In the drawing, rectangles arranged on the upper side of the time axis corresponding to the terminal device 40A and the terminal device 40B represent data to be transmitted. First, the terminal device 40A starts transmission (601) of the data #1 to the base station device 20. Thereafter, the terminal device 40B starts transmission (602) of the data #2 to the base station device 20 in the same frequency band.

Meanwhile, the terminal device 40A performs sensing and detects a transmission signal of the data #2 (603). Here, the sensing refers to any one of an operation of detecting by using a known sequence of signals received by the radio communication device or the like, an operation of determining whether power is equal to or less than a threshold value, and an operation of decoding a part or all of signals received by the radio communication device, or an operation of a combination thereof. The terminal device 40A performs an interference avoidance operation which is an operation of avoiding interference based on the detected reception signal. The terminal device 40A in the drawing illustrates an example of stopping the transmission of the data #1 as the interference avoidance operation. This can avoid interference.

Note that the terminal device 40A in the drawing performs reception again after the interference avoidance operation, detects stop of transmission from the terminal device 40B, and resumes transmission (604) of the data #1. In this manner, it is possible to operate in cooperation with the terminal device 40B. Furthermore, in the terminal device 40A, data transmission and sensing can be performed at the same time, and sensing can be performed after data is transmitted. That is, sensing can be performed during a data transmission period.

The operation of the terminal device 40A will be described in detail. In a case where the terminal device 40A does not detect a signal of another radio communication device, the terminal device continues transmission. In a case where a signal of another radio communication device is detected, it is determined whether the signal can be sensed. Here, the sensable state refers to a state in which an operation of detecting by using a known sequence of signals received by the radio communication device or the like, an operation of determining whether power is equal to or less than a threshold value, an operation of decoding a part or all of signals received by the radio communication device, and the like are possible.

In the sensing operation described above, the terminal device 40A can determine whether decoding is possible based on a threshold set in advance based on a standard or the like. Furthermore, the terminal device 40A can make a determination based on QoS (Quality of Service) such as a reception SINR (Signal to Interference plus Noise power Ratio). Note that the case where the detected signal cannot be sensed includes a case where the signal cannot be decoded due to collision of a plurality of signals.

In a case where the detected signal cannot be sensed, the terminal device 40A executes a first interference avoidance operation. The first interference avoidance operation corresponds to stopping (interrupting) transmission, changing radio resources, changing beams, adjusting a sensing period, and adjusting a transmission standby time.

The transmission stop operation is an operation of stopping a signal currently transmitted by the terminal device 40A. The terminal device 40A performs the fallback to the conventional sensing operation after performing the transmission stop operation. The conventional sensing corresponds to, for example, an LBT (Listen Before Talk) operation, a CSMA-CA operation, and a sensing operation in sidelink. The sensing operation in the sidelink corresponds to sensing by SCI decoding and sensing by reception power.

The operation of changing the radio resource is an operation of changing the radio resource used for transmission by the terminal device 40A. The radio resources correspond to different resource elements (Resource elements), subchannels (Sub CHs), or resource blocks (Resource blocks) in the same frequency channel. Further, this radio resource further corresponds to a resource element, a subchannel, or a resource block of another channel in the same frequency band or a channel in another frequency band. Further, the radio resources further correspond to resource elements, sub-channels, or resource blocks of channels in different frequency bands. In addition, the change of the radio resource may include a transition between a licensed band and an unlicensed band, and a transition to a RAT (Radio Access Technology) different from a currently used radio communication system (RAT) .

In addition, the radio resource change operation includes a case where the terminal device 40A performs an operation of connecting to a different radio communication system in advance and a case where a transition operation of the radio communication system is performed as a part of the radio resource change operation. At this time, after the transition to a different frequency channel, signal transmission may be performed as it is by using radio resources prepared in advance, allocation of radio resources may be requested to the base station device 20, or a fallback may be made to the sensing operation which is a communication right acquisition operation.

The beam changing operation is an operation of selecting a beam pattern different from the current beam pattern or selecting a precoding pattern different from the current beam pattern. By the above-described operation of stopping transmission, changing radio resources, and changing beams, the terminal device 40A can avoid interference and transmit and receive signals. As a result, it is possible to avoid the signals of the terminal device 40A and the terminal device 40B from being in an interference state with each other.

The adjustment operation of the sensing period corresponds to a change in transmission standby time for acquiring a transmission opportunity, a change in sensing start, and a change in the presence or absence of sensing.

In addition, as the first interference avoidance operation, it is also possible to change a contention window size, change the start of sensing, and change the presence or absence of sensing.

The contention window size is a parameter that sets a transmission standby time for acquiring a transmission opportunity. After the terminal device 40A detects the signal collision and performs the first interference avoidance operation or a second interference avoidance operation to be described later to avoid the signal collision, the contention window size is changed to be smaller than that at the time of previous signal transmission or to an initial value. As a result, it is possible to facilitate acquisition of a transmission opportunity of the terminal device 40A that has performed the operation of avoiding signal collision and to secure the fairness of the transmission opportunities between the terminal devices.

The change of the sensing start is to change the parameter of a sensing interval set in the terminal device 40A. The sensing interval is a time length for recording what kind of interference has arrived at the radio station in the past, and is a parameter of the terminal device 40A. For example, in a case where the collision is detected, the terminal device 40A can expand the sensing interval. As a result, the terminal device 40A can implement a radio resource selection operation in consideration of interference from another radio station (terminal device 40B) that occurs at a longer cycle.

The change of the presence or absence of sensing is to change whether or not to perform an operation of monitoring interference of the terminal device 40B. In the case of absence of sensing, the terminal device 40A performs transmission without monitoring the surrounding interference environment before transmission. With this operation, the terminal device 40A transitions to the power saving state until immediately before transmission, and power consumption can be reduced. Furthermore, according to this operation, the terminal device 40A omits the time for observing the surrounding interference environment and performs the transmission, and thus, it is possible to realize low signal delay.

On the other hand, in the case of sensing, the terminal device 40A can observe the surrounding interference environment and determine a signal transmission opportunity at which no interference occurs. With this operation, the base station device 20A can avoid signal collision. By dynamically switching these operations, appropriate communication can be realized in accordance with the interference environment. Note that a plurality of operations can be combined as the first interference avoidance operation described above.

In a case where the received signal can be sensed, the terminal device 40A can perform the second interference avoidance operation in a case where the reception signal is addressed to the terminal device and the communication quality is not predetermined. Here, the predetermined communication quality means that the received SINR of the reception signal is a sensable value, and can be determined based on a combination of the number of modulation levels and the coding rate of the reception signal. The predetermined communication quality can be determined when the required SINR calculated from the number of modulation levels and the coding rate of the reception signal notified by the header or the control signal is satisfied.

The second interference avoidance operation corresponds to a transmission stop according to the length of the collided signal and a cooperative operation with the interference station (terminal device 40B).

The transmission stop according to the length of the collided signal is an operation in which the terminal device 40A stops the transmission in accordance with the length of the collided signal. The length of the signal can be determined based on information on the time length of the signal described in the physical header of the signal received by the terminal device 40. Alternatively, the length of the signal may be information newly described in the control signal area within the time interval in which the signal is transmitted. For example, the length of this signal may be transmitted by newly storing the position information of the symbol in which the data is stored in the control signal area within the time interval in which the radio station is configured by a plurality of OFDM symbols.

The cooperative operation with the interference station is an operation in which the terminal device 40A (radio station) and the terminal device 40B (interference station) cooperate with each other and prevent mutual signals from interfering. As a first example of the cooperative operation with the interference station, there is determination of the radio station that executes the interference avoidance operation. For example, when one of the radio station and the interference station is a base station, it is conceivable that a base station device that can easily schedule radio resources executes the avoidance operation. For example, when a signal of a radio station collides with a signal of a base station device to which the radio station is not connected, the radio station stores information transmitted by the base station device in a physical header in order to determine that the signal is a signal transmitted from a base station device of another cell. Alternatively, information indicating that the signal is a signal of the base station device is stored in a part of the signal, for example, a portion storing control information. Alternatively, the radio station shares the transmission schedule information of the peripheral base station device shared among the base station devices from the connected base station device, and determines whether the signal collided when the transmission is executed is a signal transmitted from the base station device.

Similarly, as a determination method of the radio station that performs the interference avoidance operation, it is possible to perform determination based on priority of a signal. For example, the radio station stores the priority information of the signal in the physical header of the signal to be transmitted or a part of the signal, for example, a portion that stores the control information. The priority information corresponds to QoS information of a signal, allowable delay time information, information on whether retransmission is possible, and information on a radio system used for transmission by itself. The QoS information defines the importance of data stored in a signal in stages. The allowable delay time information is information on a time length that the signal is allowable, and is information approximately indicating a time discretely or information indicating a specific time length. The information indicating whether retransmission is possible is 1-bit flag information indicating whether a signal can be retransmitted. The information of the radio system used for transmission by itself is information indicating which radio system a signal belongs to in a readable form between different systems. The radio station can compare the priority information of the signal of the radio station with the priority information of the signal of the interference station when the signal collides, and perform the avoidance operation when the priority of the signal of the radio station is low.

As a second example of the cooperative operation with the interference station, there is a request for an interference avoidance operation. When a collision of signals is detected, the radio station transmits a signal requesting the first interference avoidance operation and the second interference avoidance operation. At this time, the radio station requesting the interference avoidance operation can be determined based on the priority information described above. The radio station compares the priority information of the signal of the radio station with the priority information of the signal of the interference station when the signals collide, and transmits a signal requesting an interference avoidance operation when the priority of the signal of the radio station is high.

In a case where the received signal can be sensed, and the reception signal is addressed to the terminal device itself and the communication quality is equal to or higher than a certain level, the terminal device 40A executes a reception operation by full-duplex communication.

Note that the operation of the base station device 20A is performed based on the control of the control unit 24.

### [Communication Method]

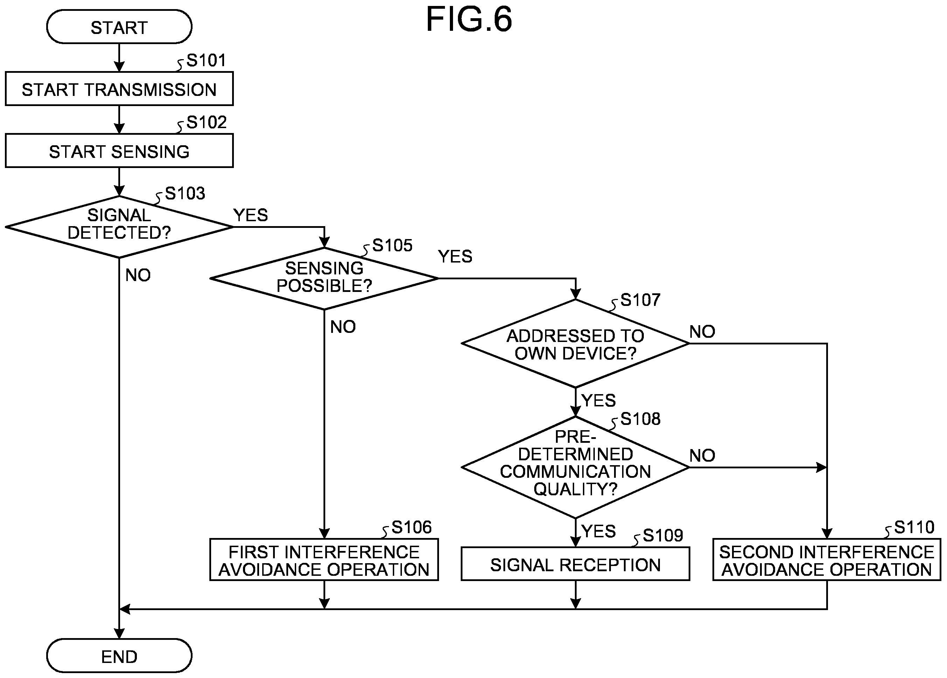

FIG. 6 is a diagram illustrating an example of a communication method according to an embodiment of the present disclosure. First, the control unit 24 of the base station device 20A performs control to start transmission (Step S101). Next, the control unit 24 performs sensing by in-band full-duplex communication (Step S102). As a result, in a case where the signal has not been detected (Step S103, No), the control unit 24 performs control to continuously transmit the signal.

On the other hand, if a signal has been detected (Step S103, Yes), the control unit 24 determines whether the detected signal can be sensed (Step S105). As a result, in a case where the sensing is not possible (Step S105, No), the control unit 24 performs the first interference avoidance operation (Step S106).

On the other hand, in a case where sensing is possible (Step S105, Yes), the control unit 24 determines whether the detected signal is addressed to its own terminal device 40A (Step S107). As a result, when it is addressed to itself (Step S107, Yes), the control unit 24 determines whether the communication quality is a predetermined communication quality (Step S106). As a result, in the case of the predetermined communication quality (Step S108, Yes), the control unit 24 performs control to receive a signal by full-duplex communication (Step S109).

When the signal detected in Step S107 is not addressed to its own terminal device 40A (Step S107, No) and when the communication quality is not the predetermined communication quality in Step S108 (Step S108, No), the control unit 24 performs the second interference avoidance operation (Step S110). The signal addressed to itself corresponds to a signal that leaves a transmission period for a peripheral terminal such as a PS-Poll or a CTS, a signal that stores information regarding an interference amount, a trigger signal that stores control information for triggering a specific operation, and the like. In addition, the signal not addressed to itself corresponds to a signal of a link in the same direction that is destined for another radio station in the same cell, a signal of a link in a reverse direction that is destined for another radio station in the same cell, a signal of a link in the same direction that is destined for another radio station in a different cell, a signal of a link in a reverse direction that is destined for another radio station in a different cell, a signal on co-directional link that is another destination in a different RAT, and a signal on the reverse link that is another destination in a different RAT.

Note that the communication method in FIG. 6 can also be executed in communication between the base station device 20 and the terminal device 40.

### [Examples in CSMA-CA]

An example in a network on the premise of CSMA-CA (Carrier Sense Multiple Access with Collision Avoidance) operation will be described. When transmitting a signal, the terminal device 40A checks whether a channel is available similarly to CAMA-CA of the related art. When the channel is available, the terminal device 40A starts signal transmission. When the terminal device 40A senses another signal by the in-band full-duplex communication during signal transmission, the terminal device 40A starts the above operation for avoiding interference.

A case where information stored in a header or a data portion of the signal in the sensed signal can be extracted will be described. In a case where the information regarding the transmission interval is described in the detected signal, the terminal device 40A stops the transmission based on the information regarding the length of the signal described in the signal. The terminal device 40A may resume the transmission after the transmission interval ends. Alternatively, in a case where the transmission terminal device of the signal to be interference can perform full-duplex communication, the terminal device 40A may stop the transmission of the signal currently being transmitted and transmit a signal requesting to stop the transmission or a signal requesting to use another resource.

Furthermore, in a case where the information regarding the transmission interval is described in the signal, in a case where another resource is available, the terminal device 40A may request the transmission terminal to transition to the radio resource. The transmission terminal may acquire the radio resource again based on the CSMA-CA operation, or may use the radio resource allocated in advance from the AP or the base station.

In addition, in a case where the signal is a signal that allocates a radio resource to another terminal device such as a trigger frame, the operation may be switched to use a vacant radio resource or a resource for random access. In addition, in the resources, a signal requesting a subordinate terminal device to throw a signal requesting to stop transmission or a signal requesting to allocate radio resources again in a form of securing radio resources to be transmitted by the own terminal device may be transmitted to the base station device 20.

Furthermore, in a case where the signal is a signal for acquiring the transmission interval in advance, a signal requesting cancellation of transmission or a signal requesting use of another radio resource may be transmitted.

When the received signal cannot be decoded, the transmission terminal performs an interference avoidance operation. Examples of the interference avoidance operation include a change of a resource to be used to another radio resource and a change of a beam.

### [Example in Network Based on Sensing Operation]

Next, an example of a network on the premise of the sensing operation will be described. When traffic is generated, the terminal device 40A starts sensing with respect to available radio resources. Through this sensing, the terminal device 40A grasps the use state of the available radio resources. Specifically, the terminal device 40A acquires schedule information of another terminal device 40 and measures a time average of interference power of each radio resource. The terminal device 40A determines a radio resource to be used based on the sensing and starts transmission. In a case where another signal is detected during this transmission, the terminal device 40A starts an operation for avoiding interference.

A case where information stored in a header or a data portion of the signal in the sensed signal can be extracted will be described. In this case, the terminal device 40A selects the operation of avoiding interference based on the information attached to the signal. For example, in a case where the number of repeated transmissions and the frequency hopping pattern of the interference signal are described, the terminal device 40A switches the pattern of the radio resources to be used for transmission so that the next transmission timing and the used frequency channel do not overlap. At this time, the terminal device 40A can also perform an operation of continuing transmission with the currently used radio resource when determining that the other party terminal side performs the interference avoidance operation based on the QoS information or the transmission priority information of the signal. Furthermore, in a case where information for determining a terminal is added to a signal, the terminal device 40A can also select an interference avoidance operation on the assumption of an interfered state on the reception side based on position information with the terminal transmitted by the terminal device itself.

When the received signal cannot be decoded, the terminal device 40A performs an interference avoidance operation. Examples of the interference avoidance operation include a change of a resource to be used to another radio resource and a change of a beam.

### g[Example in Sidelink Network]

Next, an example in a sidelink network will be described. The terminal device 40A performs sensing and grasps a past interference environment. When traffic occurs, the terminal device 40A selects a radio resource to be used for transmission based on a sensing result. At this time, interference occurs when another terminal device selects the same radio resource.

In the present example, when the terminal device 40A detects a signal from another terminal device by the in-band full-duplex communication, the terminal device 40A stops the transmission by the resource and shifts to the sensing operation again. Furthermore, the terminal device 40A may continue the sensing operation during transmission. In addition, the terminal device 40A may transmit information requesting the interference terminal to control the transmission power. As a result, interference can be quickly avoided, and the terminal device 40A can shift to the next sensing operation. In addition, in a case where a signal addressed to itself arrives while the terminal device 40A is performing a sensing operation during transmission, the terminal device 40A can switch from sensing operation to signal receiving operation.

As described above, the terminal device 40A according to the embodiment of the present disclosure detects a signal in the same frequency band from another terminal device during transmission of the signal, and performs an interference avoidance operation in cooperation with another terminal device based on the detected signal. As a result, it is possible to improve the use efficiency of the communication resources in the terminal device 40A and other terminal devices while reducing the influence of interference.

### (Other Modifications)

The control device that controls the base station device 20 and the terminal device 40 of the present embodiment may be implemented by a dedicated computer system or may be implemented by a general-purpose computer system.

For example, a communication program for executing the above-described operation is stored and distributed in a computer-readable recording medium such as an optical disk, a semiconductor memory, a magnetic tape, or a flexible disk. Then, for example, the program is installed in a computer, and the above-described processing is executed to configure the control device. At this time, the control device may be a device (for example, a personal computer) outside the base station device 20 and the terminal device 40. Furthermore, the control device may be a device (for example, the control unit 24 and the control unit 45) inside the base station device 20 and the terminal device 40.

In addition, the communication program may be stored in a disk device included in a server device on a network such as the Internet so that the communication program can be downloaded to a computer. In addition, the above-described functions may be realized by cooperation of an operating system (OS) and application software. In this case, a portion other than the OS may be stored in a medium and distributed, or a portion other than the OS may be stored in a server device and downloaded to a computer.

Among the processes described in the above embodiments, all or a part of the processes described as being performed automatically can be performed manually, or all or a part of the processes described as being performed manually can be performed automatically by a known method. In addition, the processing procedure, specific name, and information including various data and parameters illustrated in the document and the drawings can be optionally changed unless otherwise specified. For example, the various types of information illustrated in each drawing are not limited to the illustrated information.

In addition, each component of each device illustrated in the drawings is functionally conceptual, and is not necessarily physically configured as illustrated in the drawings. That is, a specific form of distribution and integration of each device is not limited to the illustrated form, and all or a part thereof can be functionally or physically distributed and integrated in an optional unit according to various loads, usage conditions, and the like. Note that this configuration by distribution and integration may be performed dynamically.

In addition, the above-described embodiments can be appropriately combined in a region in which the processing contents do not contradict each other. Furthermore, the order of each step illustrated in the flowchart of the above-described embodiment can be appropriately changed.

Furthermore, for example, the present embodiment can be implemented as any configuration constituting a device or a system, for example, a processor as a system LSI (Large Scale Integration) or the like, a module using a plurality of processors or the like, a unit using a plurality of modules or the like, a set obtained by further adding other functions to a unit, or the like (that is, a configuration of a part of the device).

Note that, in the present embodiment, the system means a set of a plurality of components (devices, modules (parts), and the like), and it does not matter whether or not all the components are in the same housing. Therefore, a plurality of devices housed in separate housings and connected via a network and one device in which a plurality of modules is housed in one housing are both systems.

Furthermore, for example, the present embodiment can adopt a configuration of cloud computing in which one function is shared and processed by a plurality of devices in cooperation via a network.

Although the embodiments of the present disclosure have been described above, the technical scope of the present disclosure is not limited to the above-described embodiments as it is, and various modifications can be made without departing from the gist of the present disclosure. In addition, components of different embodiments and modifications may be appropriately combined.

Note that the effects described in the present specification are merely examples and are not limited, and other effects may be provided.

Note that the present technology can also have the following configurations.
(1) A communication device comprising a control unit that performs sensing in the same frequency band as transmission when transmitting to another radio communication device, and performs an avoidance operation based on a detection result when detecting another signal.
(2) The communication device according to the above (1), wherein the control unit selects the interference avoidance operation according to the detected reception signal.
(3) The communication device according to the above (2), wherein the control unit decodes the detected reception signal and selects the interference avoidance operation according to a result of the decoding.
(4) The communication device according to the above (3), wherein the control unit selects a first interference avoidance operation when the decoding is not performed, and selects a second interference avoidance operation based on a destination of the decoded reception signal when the decoding is performed.
(5) The communication device according to the above (4), wherein the first interference avoidance operation is stopping the transmission, changing a radio resource in the transmission, changing a beam pattern in the transmission, or adjusting a sensing period.
(6) The communication device according to the above (5), wherein the control unit performs full-duplex communication in the same band as other communication devices.
(7) The communication device according to the above (4), wherein the second interference avoidance operation is a cooperative operation with other communication devices that have transmitted the reception signal.
(8) A communication method comprising:
   detecting a reception signal by performing sensing in the same frequency band as transmission when transmitting to another radio communication device; and
   performing an interference avoidance operation of avoiding interference based on a detection result.

### Reference Signs List

1 COMMUNICATION SYSTEM
20, 20A, 20B BASE STATION DEVICE
24, 45 CONTROL UNIT
40, 40A, 40B TERMINAL DEVICE

## Claims

1. A communication device comprising a control unit that performs sensing in the same frequency band as transmission when transmitting to another radio communication device, and performs an avoidance operation based on a detection result when detecting another signal.

2. The communication device according to claim 1, wherein the control unit selects the interference avoidance operation according to the detected reception signal.

3. The communication device according to claim 2, wherein the control unit decodes the detected reception signal and selects the interference avoidance operation according to a result of the decoding.

4. The communication device according to claim 3, wherein the control unit selects a first interference avoidance operation when the decoding is not performed, and selects a second interference avoidance operation based on a destination of the decoded reception signal when the decoding is performed.

5. The communication device according to claim 4, wherein the first interference avoidance operation is stopping the transmission, changing a radio resource in the transmission, changing a beam pattern in the transmission, or adjusting a sensing period.

6. The communication device according to claim 5, wherein the control unit performs full-duplex communication in the same band as other communication devices.

7. The communication device according to claim 4, wherein the second interference avoidance operation is a cooperative operation with other communication devices that have transmitted the reception signal.

8. A communication method comprising:
detecting a reception signal by performing sensing in the same frequency band as transmission when transmitting to another radio communication device; and
performing an interference avoidance operation of avoiding interference based on a detection result.
